# EUROPEAN PATENT SPECIFICATION

(11) **EP 1 117 616 B1**
(45) Date of publication and mention of the grant of the patent: **23.04.2003**
(21) Application number: 99950249.5
(22) Date of filing: 07.10.1999
(51) Int. Cl.: C01B 33/158

(54) **SOL-GEL PROCESS USING POROUS MOLD**
SOL-GEL VERFAHREN UNTER VERWENDUNG PORÖSER FORMEN
PROCEDE SOL-GEL UTILISANT UN MOULE POREUX

(30) Priority: 07.10.1998 US 103346 P; 21.01.1999 US 234738
(43) Date of publication of application: 25.07.2001
(73) Proprietor: YAZAKI CORPORATION, Minato-ku, Tokyo (JP)
(72) Inventor: GANGULI, Rahul, Ventura, CA 93033 (US); KIRKBIR, Fikret, Los Angeles, CA 90034 (US); MEYERS, Douglas, Calabasas, CA 91302 (US)
(74) Representative: Howden, Christopher Andrew
(86) International application number: US9923364
(87) International publication number: WO00020331

(56) References cited:
- US-A- 5 076 980
- US-A- 5 275 796
- US-A- 5 473 826
- US-A- 5 686 031

## Description

### BACKGROUND OF THE INVENTION

This invention relates generally to sol-gel processes for producing dry gel monoliths that subsequently can be sintered into metal oxide articles and, more particularly, relates to sol-gel processes of this kind using molds specially configured to enhance the process' effectiveness.

Substantial efforts have recently been expended in developing improved sol-gel processes for fabricating high-purity monolithic articles of metal oxide. In such processes, a desired solution, i.e., a sol, containing metal-oxide-forming compounds, solvents, and catalysts, is poured into a mold and allowed to react. The solution typically includes a metal alkoxide, water, an alcohol, and an acid and/or base catalyst. Typical metal alkoxides include tetraethyl orthosilicate (for forming articles of silica) and tetrabutyl titanate (for forming articles of titanium dioxide). Following hydrolysis and condensation reactions, the sol forms a porous matrix of solids, i.e., a gel. With aging, the gel shrinks in size by expelling fluids from the pores of the gel. The wet gel is then dried in a controlled environment, typically by removing the gel from the mold and placing it into an autoclave for subcritical or supercritical heating. The dried gel then is sintered into a solid monolith.

Advantages of the sol-gel process include chemical purity and homogeneity, flexibility in the selection of compositions, the ability to process at relatively low temperatures, and the producing of monolithic articles close to their final desired shapes, thereby minimizing finishing costs.

The efficiency of the process can be enhanced if the steps of gelling, aging and drying all are carried out within a single chamber and without the need to remove the gel from the mold. The need to remove the gel from the mold at an intermediate step of the process not only requires mechanical handling of the fragile gel and mold, but also lengthens the processing time. This is because removing the gel from the mold following the step of aging can be performed only after the gel has cooled to room temperature from its aging temperature, e.g., 60°C.

An important factor bearing on the ability to perform the entire sol-gel process without removing the gel from the mold is the nature of the material from which the mold is formed. The ideal mold material should have good release characteristics, such that the fragile monolithic gel can be removed from the mold without damage.

The mold material also should be inert to attack from chemicals used in the sol-gel process, e.g., acid catalysts such as hydrochloric acid (HCl) and base catalysts such as ammonium hydroxide (NH₄OH). This requirement effectively precludes the use of molds formed of metal, because metal impurities could be leached from the mold and trapped in the gel, thus being retained in the metal oxide monolith. Metal impurities retained within a metal oxide monolith are particularly undesirable because they can lead to unacceptable material properties. For example, metal ions in fused silica photoblanks can degrade transmission of ultraviolet light by the photoblanks. Such leaching also can reduce the mold's life span.

Noble metal molds, while nonreactive, are extremely costly. Metal molds coated with Teflon or with noble metals are somewhat less costly, but the coating is usually imperfect, with pinhole openings that allow contamination of the monolith or that lead to degradation of the coating and the mold. Glass molds coated with passivating agents for noncontamination are difficult to machine and are usually unacceptably brittle.

If the gel is to be dried while still located within the mold, the mold material must be able to withstand typical drying temperatures, e.g., 200°C and above. This means that the mold must not decompose at such temperatures and it should not deform when repeatedly cycled between room temperature and the maximum drying temperature. This requirement effectively excludes the use of molds formed of common organic polymeric materials such as polymethyl pentane and Teflon, which have softening temperatures substantially lower than 200°C.

It should therefore be appreciated that there is a need for a sol-gel process in which the steps of gelling, aging and drying all are carried out without removing the material from the mold. The present invention fulfills this need and further provides further related advantages.

### SUMMARY OF THE INVENTION

According to the present invention, there is provided a process for producing a dry porous gel monolith comprising the steps of:
placing a solution comprising an alkoxide of an element selected from the group consisting of silicon, titanium, aluminium, zirconium, germanium, tin, lead and antimony into a mold having a body formed principally of a porous material selected from the group consisting of graphite, silicon carbide, titanium carbide, tungsten carbide, and mixtures thereof, said material being inert to the solution;
allowing the solution to gel within the mold;
drying the gel within the mold ; and
removing the dried gel from the mold to produce a dry porous gel monolith.

According to another aspect of the present invention, there is provided a process for producing a monolithic article of high-purity silica, comprising the steps of:
mixing an alkoxide solution that consists essentially of the following components, in prescribed relative proportions
   tetraethyl orthosilicate or tetramethyl orthosilicate;
   an alcohol;
   deionized water; and
   an acid catalyst and/or a base catalyst;
placing the alkoxide solution into a mold formed of a porous graphite material having a porosity in the range of about 10 to 15% and having a substantially uniform thickness in the range of 3 to 5mm;
   allowing the alkoxide solution to gel within the porous graphite mold;
   aging the gel within the porous graphite mold;
   drying the gel within the porous graphite mold;
   removing the dried gel from the porous graphite mold; and
   sintering the dried gel to produce a monolithic article of high-purity silica glass.

The present invention resides in an improved sol-gel process for producing a dry porous gel monolith, in which the process steps of gelling, aging and drying all are carried out while the gel remains within a mold, thus substanntially reducing mechanical handling of the gel and mold and substantially enhancing the process' efficiency. More particularly, the process incorporates steps of 1) placing a solution into a mold formed of a material such as graphite, silicon carbide, titanium carbine or tungsten carbide, 2) allowing the solution to gel within the mold, 3) drying the gel within the mold, and 4) removing the dried gel from the mold to obtain the gel monolith.

The process is useful when used to produce gel monoliths from solutions comprising various metal alkoxides, such SiO₂, TiO₂, Al₂O₃, and ZrO. The process has particular advantages when used to produce gel monoliths in the form of high-purity silica. In such applications, the solution consists essentially of tetraethyl orthosilicate, an alcohol, deionized water, and an acid catalyst and/or a base catalyst, in prescribed relative proportions. In addition, the process can further include a step of aging the gel within the mold, before the step of drying, and a further step of sintering the dried gel after the step of removing.

In one configuration, the mold is configured to be substantially homogeneous and porous. In an alternative configuration, the mold is configured to have a porous body with a substantially non-porous inner skin. In the alternative configuration, the non-porous skin prevents plugging of the pores of the mold with gel material, allowing for easier cleaning of the mold and reduced sticking and contamination of the metal oxide monolith. In both configurations, the pore liquid escapes from the narrow annular space between the mold and the gel. In addition, for a porous mold, the mold's porosity facilitates this drying by allowing the liquid contained within the gel's pores to escape directly through the mold itself. The mold preferably has a substantially uniform thickness in the range of 3 to 5 mm. In the case of molds formed of graphite, the graphite preferably has a bulk density of about 1.75 gm/cm³ and a porosity in the range of about 10 to 15%.

In other more detailed features of the invention, the steps of allowing the solution to gel, aging the gel, and drying the gel all occur while the solution and gel remain located within the mold. In addition, these steps all occur while the mold is located within an autoclave. The step of drying the gel in the autoclave can occur either under subcritical or supercritical conditions.

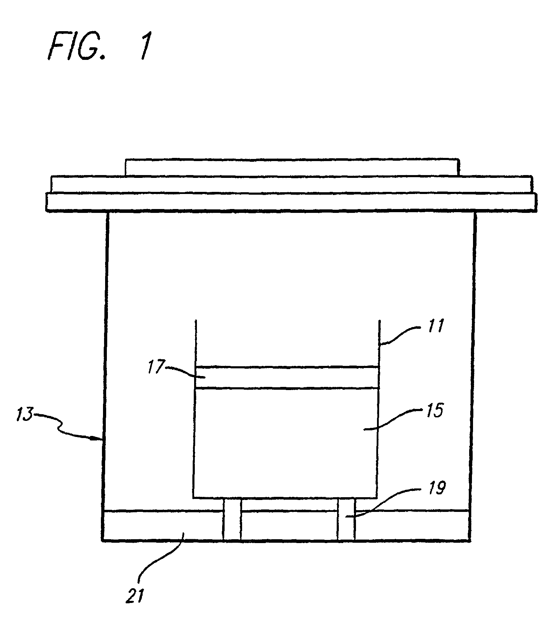

Other features and advantages of the present invention should become apparent from the following description of the preferred process, taken in conjunction with the accompanying drawing, which illustrates, by way of example, the principles of the invention.

### BRIEF DESCRIPTION OF THE DRAWING

The FIGURE is a sectional elevational view of a porous graphite mold located within an autoclave and specially configured for use in a sol-gel process for producing metal oxide monoliths.

### DESCRIPTION OF THE PREFERRED PROCESS

To illustrate the preferred process, an example of the process for producing a silica gel is provided below.

With reference now to the illustrative FIGURE, there is shown a mold 11 located within an autoclave 13, for use in a sol-gel process for producing crack-free silica monoliths. The mold has a size and shape substantially the same as that desired for the monolith to be produced, and it is formed of a porous graphite material, which enables the successive sol-gel process steps of gelling, aging and drying all to be carried out without the need to remove the gel from the mold.

In an initial step of the process, a suitably hydrolyzed silicon alkoxide sol is poured into the mold 11 and allowed to gel at room temperature for about 16 hours. One suitable sol can comprise tetraethyl orthosilicate (TEOS), ethanol, deionized water, hydrochloric acid, and ammonia, in relative molar proportions of about 1 : 1.5 : 4 : 0.0001 : 0.0003, respectively. Alternatively, tetramethyl orthosilicate (TMOS) can be substituted for the TEOS as an appropriate silicon alkoxide. Also, as is discussed below, other metal alkoxides can be used to produce monoliths of materials other than silicon.

After the sol has gelled to form a gel 15, a suitable amount of fresh liquid 17 is added to the mold 11, to top off and fully immerse the gel. This helps to prevent the gel from cracking during the subsequent step of aging. It also eliminates the need to use a lid on the mold, thus simplifying the process. The composition of this added liquid preferably is the same as the pore liquid contained within the gel, and will vary for different gels. In this particular case, this liquid is 80-95% ethanol and 5-20% water. The depth of the liquid should be 1-20 mm. Less depth will not effectively prevent cracking of the gel during aging, while greater depth will cause undesirable changes in the gel microstructure.

The graphite mold 11 with the immersed gel 15 is then introduced into the autoclave 13, where it is elevated above the floor of the autoclave on a support 19, and the temperature within the autoclave is raised to about 60°C over a span of about six hours, and maintained at that temperature for about 42 hours. During this aging step, a saturated ambient is maintained within the autoclave by providing an excess of pore liquid on the floor of the autoclave, as indicated by the reference numeral 21. The aging step effectively increases the gel's average pore size and strengthens the gel, so as to reduce the gel's susceptibility to cracking during the subsequent step of drying. The duration of the aging step should be in the range of 36 to 100 hours. Shorter durations will be insufficient to fully age the gel, and longer durations may cause the liquid 17 to evaporate completely, causing premature drying and resultant cracking.

After the aging step has been completed, a drying solvent, e.g., isopropanol, is introduced into the autoclave 13, and the temperature and pressure within the autoclave are raised according to prescribed profiles. Drying can be achieved using both subcritical and supercritical procedures. One suitable subcritical drying procedure is disclosed in U.S. Patent No. 5,473,826, which is incorporated by reference.

Significantly, the step of drying is performed without first removing the gel 15 from the mold 11. In the preferred process, the mold is homogeneous and formed of an isomolded, fine-grained graphite material having high thermal conductivity and high strength. One suitable graphite material is available from Le Carbone-Lorraine, under the name Graphite Grade 2191. It has a bulk density of about 1.74 gm/cm³, and it has a porosity of about 13%.

Alternatively, the graphite mold 11 can incorporate a non-porous, mirrorlike portion defining its inner skin or wall. Incorporation of the skin prevents seepage of gel material into the mold pores. Preventing this seepage prevents sticking of the monolith to the mold, and makes easier the production of crack-free gels. Use of an inner skin also makes cleaning of the mold easier after use. This inner skin can be produced by deposition of non-porous graphite on the surface of the mold.

In addition, the mold can be formed of porous carbide materials such as silicon carbide, titanium carbide, tungsten carbide, and mixtures thereof. These materials can survive the required high temperatures and are reasonably inert. However, such materials are more difficult and expensive to machine into the required mold shapes than is graphite. In addition, these materials generally do not have good release characteristics, and gels can sometimes adhere to molds made of these materials. These problems can be reduced by using the carbide materials to form the non-porous inner skin discussed above. Deposition of these materials on a machined graphite mold will avoid the need to shape these materials, resulting in reduced cost. Also, when the carbide materials are used as a nonporous skin, rather than as a porous mold material, they provide for improved release characteristics.

The mold 11 has a size and shape substantially the same as that desired for the monolith to be produced, and it preferably has a uniform thickness in the range of about 3 to 5 mm. A minimum thickness of 3 mm will ensure that the mold has adequate structural integrity, and a maximum thickness of 5 mm will ensure that the mold will not unduly inhibit the escape of pore liquid during the step of drying. When a mold having a non-porous inner skin is used, the inner skin preferably has a uniform thickness less than about 1 mm.

Presented below is a more detailed description of the preferred process for producing dry silica gel monoliths using a mold 11 formed of a porous graphite material. Although the process is described with particular reference to silica gel monoliths formed of silica, it will be appreciated that the use of a mold formed of a graphite material can enhance the efficient production of other aerogel or xerogel monoliths as well.

Mold Cleaning - For the graphite mold 11 to have the desired release properties, it is important that it be thoroughly cleaned of particles remaining inside the pores of the mold from a previous casting. This can be achieved by first immersing the mold in a dilute 7% hydrofluoric acid (HF) solution for 30 minutes, followed by an ultrasonic HF bath for 20 minutes. The mold then is immersed in deionized water for 30 minutes, followed by two successive ultrasonic baths in deionized water, for 20 minutes each. Finally, the mold is placed in a clean drying oven to dry. As is discussed above, this cleaning process is considerably easier if the mold used incorporates a nonporous skin.

Sol Preparation and Casting - The prescribed sol is mixed in a reactor vessel that has been appropriately cleaned with a dilute 7% HF solution. In the preferred process, for producing a silica gel monolith, this sol incorporates TEOS, ethanol, deionized water, HCl, and NH₄OH, in relative molar proportions of about 1 : 1.5 : 4 : 0.0001 : 0.0003, respectively. The sol is then transferred to the previously cleaned graphite mold 11, while located in a Class 100 laminar flow hood.

Gelation - The graphite mold 11, with the cast sol, is then introduced into the autoclave 13, for gelation. After the autoclave has been sealed, the sol is allowed to gel at room temperature for 16 hours. At that time, an aging solution having a composition of about 88% ethanol and 12% deionized water is pumped into the autoclave, to substantially fill the autoclave. The autoclave then is drained, leaving the mold topped off with the liquid and further leaving sufficient liquid 21 remaining on the floor of the autoclave to maintain a saturation pressure of 9 psi at 60°C. This topping liquid is added to inhibit cracking of the gel during the subsequent aging step and further to eliminate the need for a lid on the mold, thus simplifying the process. The FIGURE depicts the autoclave and mold at this stage of the process.

Aging - After the graphite mold 11 has been topped off with the prescribed aging solution, the temperature of the autoclave is linearly ramped up to 60°C over a time span of 6 hours, and the temperature is then maintained at that temperature for a further 42 hours. This completes an in-situ aging step, in which the average pore size in the gel 15 is increased to a point where the gel can properly avoid cracking during the subsequent drying step.

Drying - After the step of aging has been completed, the aging solution 21 that remains on the floor of the autoclave 13 is drained away and pure isopropanol is pumped into the autoclave at a pressure of 9 psi, while the temperature is maintained at 60°C. About 1500 milliliters of isopropanol are added for an autoclave having a volume of 20 liters. The temperature of the autoclave is then linearly ramped up to 240°C and allowed to equilibrate at that temperature for one hour. This typically increases the pressure to about 620 psi. The pressure within the autoclave is released over a period of about five hours, while the 240°C temperature is maintained. Finally, the autoclave is cooled to room temperature and the graphite mold 11 and gel 15 are removed.

The dried, crack-free monolithic aerogel 15 then can be readily removed from the graphite mold 11. Following sintering, a pure silica monolith of optical quality is obtained. The mold then can be used again to produce further dry porous gel monoliths, if it is appropriately cleaned in the manner described above.

The special use of a mold 11 formed of graphite substantially enhances the efficiency of the sol-gel process. The use of this material is particularly effective, because it allows the successive sol-gel process steps of gelling, aging and drying all to be carried out without the need to remove the gel from the mold. Graphite also is a particularly advantageous material for the mold 11, because it can withstand temperatures greater than 300°C, under the specified drying conditions, without deforming or decomposing. In addition, graphite does not chemically interact with the specified sol, and it exhibits good mold release properties under controlled conditions. If any graphitic carbon is incidentally introduced as an impurity into the gel monolith, it can be readily removed during the sintering operation. Finally, molds formed of graphite are substantially less expensive than are molds formed of other conventional materials.

The process, though illustrated for production of silica monoliths, can be used to produce monoliths from other metal oxides, including oxides of titanium, aluminum, zirconium, germanium, tin, lead, and antimony. Preparation of the various solutions is known in the art, and described in various patents and publications. The gel materials can also include dopants such as erbium, neodymium, boron, and phosphorus. These dopants are known in the art, and are selected to impart particular functionality to the monolith produced. For example, erbium is used as a dopant in silica monoliths to produce fiber optic amplifiers. Also, germanium is used as a dopant in silica to produce graded optical refractive index glass (GRIN). Use of these dopants does not change substantially the use of the mold in the process.

As an additional example, the process for silica gel production described above can be modified to produce alumina gel. To do this, 50 grams of Al₂O₃ (for example, Alumina C available from Degussa, Inc.) is combined with n-butanol to produce a flowable suspension. This flowable suspension is then refluxed for 17 hours. Excess n-butanol and water are driven off by distillation. Then, 30 grams of this moist butoxylated alumina is mixed with 50 ml of chloroform in the mold described above. Addition of a few drops of 1,3-diaminopropane induces gelation. The mold containing the monolithic alumina is then dried according the drying process outlined above to yield alumina gel. Details for preparation of this solution are disclosed in U.S. Patent No. 4,561,872 to Luong et al., col. 9, lines 41-49.

The process is also effective for production of titania gels.

Although the invention has been described in detail with reference to the presently preferred process, those of ordinary skill in the art will appreciate that various modifications can be made without departing from the invention. Accordingly, the invention is defined only by the following claims.

## Claims

1. A process for producing a dry porous gel monolith comprising the steps of:
placing a solution comprising an alkoxide of an element selected from the group consisting of silicon, titanium, aluminium, zirconium, germanium, tin, lead and antimony into a mold (11) having a body formed principally of a porous material selected from the group consisting of graphite, silicon carbide, titanium carbide, tungsten carbide, and mixtures thereof, said material being inert to the solution;
allowing the solution to gel (15) within the mold;
drying the gel (15) within the mold (11); and
removing the dried gel (15) from the mold (11) to produce a dry porous gel monolith.

2. A process as defined in claim 1, wherein the mold (11) used in the steps of placing, allowing, drying and removing is substantially homogenous.

3. A process as defined in claim 1 or 2, wherein the porous body of the mold (11) used in the steps of placing, allowing, drying and removing has sufficient porosity to allow liquid present in pores of the gel (15) to escape therethrough.

4. A process as defined in any preceding claim, wherein the porous body of the mold (11) used in the steps of placing, allowing, drying and removing has a bulk density of about 1.75gm/cm³ and a porosity in the range of about 10 to 15%.

5. A process as defined in claim 1, wherein the mold (11) has a non-porous inner skin.

6. A process as defined in claim 5, wherein the non-porous inner skin is formed principally of a material selected from the group consisting of graphite, silicon, carbide, titanium carbide, tungsten carbide, and mixtures thereof.

7. A process as defined in claim 5 or 6, wherein the non-porous inner skin of the mold has a thickness of less than about 1mm.

8. A process as defined in any preceding claim, wherein the porous body of the mold (11) used in the steps of placing, allowing, drying and removing is formed principally of graphite.

9. A process as defined in any preceding claim, wherein the step of drying comprises a step of elevating the temperature of the gel (15) sufficiently to dry the gel (15) under supercritical conditions.

10. A process as defined in any one of claims 1 to 8, wherein the step of drying comprises a step of elevating the temperature of the gel (15) sufficiently to dry the gel (15) under subcritical conditions.

11. A process as defined in any preceding claim, wherein the step of drying comprises a step of elevating the temperature of the gel (15) to above 200°C.

12. A process as defined in any preceding claim, wherein:
the solution used in the step of placing consists essentially of the following components, in prescribed relative proportions
tetraethyl orthosilicate or tetramethyl orthosilicate,
an alcohol,
deionized water, and
an acid catalyst and/or a base catalyst; and
the process further comprises a set of sintering the dried gel monolith after the step of removing, to produce a silica monolith.

13. A process as defined in claim 12, and further comprising a step of aging the gel (15) within the mold (11), before the step of drying.

14. A process as defined in any of claims 1 to 12, wherein the solution used in the step of placing comprises the following components, in prescribed proportions:
deionized water;
colloidal silica;
a dispersant; and
an acid catalyst and/or a base catalyst.

15. A process as defined in any one of claims 1 to 12, wherein the solution used in the step of placing consists essentially of the following components, in prescribed relative proportions:
tetraethyl orthosilicate or tetramethyl orthosilicate;
an alcohol;
deionized water;
colloidal silica;
a dispersant; and
an acid catalyst and/or a base catalyst.

16. A process as defined in any preceding claim, wherein the porous body of the mold (11) used in the steps of placing, allowing, drying and removing has a substantially uniform thickness in the range of 3 to 5mm.

17. A process as defined in any preceding claim, wherein:
the process further comprises a step of aging the gel (15) within the mold (11), before the step of drying; and
wherein the step of aging includes a step of adding a topping liquid (17) to the mold, wherein the topping liquid (17) has substantially the same composition as the pore liquid and is added to a depth in the range of about 1 to 20mm.

18. A process as defined in any one of claims 1 to 16, wherein:
the process further comprises a step of aging the gel (15) within the mold, before the step of drying; and
the steps of allowing the solution to gel (15), aging the gel (15), and drying the gel (15) all occur while the solution and gel (15) remain located within the mold (11).

19. A process as defined in claim 18, wherein the steps of allowing the solution to gel (15), aging the gel (15),and drying the gel (15) all occur while the mold (11) is located within an autoclave (13).

20. A process for producing a monolithic article of high-purity silica, comprising the steps of:
mixing an alkoxide solution that consists essentially of the following components, in prescribed relative proportions
tetraethyl orthosilicate or tetramethyl orthosilicate;
an alcohol;
deionized water; and
an acid catalyst and/or a base catalyst;
placing the alkoxide solution into a mold (11) formed of a porous graphite material having a porosity in the range of about 10 to 15% and having a substantially uniform thickness in the range of 3 to 5mm;
allowing the alkoxide solution to gel (15) within the porous graphite mold (11);
aging the gel (15) within the porous graphite mold (11);
drying the gel (15) within the porous graphite mold (11);
removing the dried gel (15) from the porous graphite mold (11); and
sintering the dried gel (15) to produce a monolithic article of high-purity silica glass.

21. A process as defined in claim 20, wherein the steps of allowing the alkoxide solution to gel (15), aging the gel (15), and drying the gel (15) all occur while the solution and gel (15) remain located within the porous graphite mold (11).

22. A process as defined in claim 21, wherein the steps of allowing the alkoxide solution to gel (15), aging the gel (15), and drying the gel (15) all occur while the porous graphite mold (15) is located within an autoclave (13).

## Patentansprüche

1. Verfahren zur Herstellung eines trockenen porösen Gel-Monolithen, welches die Schritte umfaßt:
Einbringen einer Lösung, die ein Alkoxid eines Elements umfaßt, das ausgewählt ist aus der Gruppe, die aus Silicium, Titan, Aluminium, Zirconium, Germanium, Zinn, Blei und Antimon besteht, in eine Form (11) mit einem Körper, der hauptsächlich aus einem porösen Material hergestellt ist, das ausgewählt ist aus der Gruppe, die aus Graphit, Siliciumcarbid, Titancarbid, Wolframcarbid und Mischungen derselben besteht, wobei besagtes Material gegenüber der Lösung inert ist;
Gelierenlassen (15) der Lösung in der Form;
Trocknen des Gels (15) in der Form (11); und
Entnehmen des getrockneten Gels (15) aus der Form (11), um einen trockenen porösen Gel-Monolithen herzustellen.

2. Verfahren nach Anspruch 1, **dadurch gekennzeichnet, daß** die Form (11), die in den Schritten des Einbringens, Gelierenlassens, Trocknens und Entnehmens verwendet wird, im wesentlichen homogen ist.

3. Verfahren nach Anspruch 1 oder 2, **dadurch gekennzeichnet, daß** der poröse Körper der Form (11), die in den Schritten des Einbringens, Gelierenlassens, Trocknens und Entnehmens verwendet wird, ausreichend Porosität besitzt, um zu ermöglichen, daß Flüssigkeit, die in Poren des Gels (15) vorhanden sind, dort hindurch austritt.

4. Verfahren nach einem der vorangehenden Ansprüche, **dadurch gekennzeichnet, daß** der poröse Körper der Form (11), die in den Schritten des Einbringens, Gelierenlassens, Trocknens und Entnehmens verwendet wird, eine Rohdichte von etwa 1,75 g/cm³ und eine Porosität im Bereich von etwa 10 bis 15% besitzt.

5. Verfahren nach Anspruch 1, **dadurch gekennzeichnet, daß** die Form (11) eine nicht-poröse Innenhaut besitzt.

6. Verfahren nach Anspruch 5, **dadurch gekennzeichnet, daß** die nicht-poröse Innenhaut hauptsächlich aus einem Material hergestellt ist, das ausgewählt ist aus der Gruppe, die aus Graphit, Siliciumcarbid, Titancarbid, Wolframcarbid und Mischungen derselben besteht.

7. Verfahren nach Anspruch 5 oder 6, **dadurch gekennzeichnet, daß** die nicht-poröse Innenhaut der Form eine Dicke von weniger als etwa 1 mm besitzt.

8. Verfahren nach einem der vorangehenden Ansprüche, **dadurch gekennzeichnet, daß** der poröse Körper der Form (11), die in den Schritten des Einbringens, Gelierenlassens, Trocknens und Entnehmens verwendet wird, hauptsächlich aus Graphit hergestellt ist.

9. Verfahren nach einem der vorangehenden Ansprüche, **dadurch gekennzeichnet, daß** der Trocknungsschritt einen Schritt des Erhöhens der Temperatur des Gels (15) in ausreichendem Maße umfaßt, um das Gel (15) unter überkritischen Bedingungen zu trocknen.

10. Verfahren nach einem der Ansprüche 1 bis 8, **dadurch gekennzeichnet, daß** der Trocknungsschritt einen Schritt des Erhöhens der Temperatur des Gels (15) in ausreichendem Maße umfaßt, um das Gel (15) unter unterkritischen Bedingungen zu trocknen.

11. Verfahren nach einem der vorangehenden Ansprüche, **dadurch gekennzeichnet, daß** der Trocknungsschritt einen Schritt des Erhöhens der Temperatur des Gels (15) auf über 200°C umfaßt.

12. Verfahren nach einem der vorangehenden Ansprüche, **dadurch gekennzeichnet, daß**:
die Lösung, die im Einbringschritt verwendet wird, im wesentlichen aus den folgenden Komponenten, in vorgeschriebenen relativen Anteilen, besteht:
Tetraethylorthosilicat oder Tetramethylorthosilicat,
einem Alkohol,
entionisiertem Wasser und
einem Säurekatalysator und/oder einem Basenkatalysator; und
das Verfahren weiter einen Schritt des Sintems des getrockneten Gel-Monolithen nach dem Entnahmeschritt umfaßt, um einen Siliciumdioxid-Monolithen herzustellen.

13. Verfahren nach Anspruch 12, **dadurch gekennzeichnet, daß** es weiter einen Schritt des Alterns des Gels (15) in der Form (11), vor dem Trocknungsschritt, umfaßt.

14. Verfahren nach einem der Ansprüche 1 bis 12, **dadurch gekennzeichnet, daß** die Lösung, die im Einbringschritt verwendet wird, die folgenden Komponenten, in vorgeschriebenen Anteilen, umfaßt:
entionisiertes Wasser;
kolloidales Siliciumdioxid;
ein Dispersionsmittel; und
einen Säurekatalysator und/oder einen Basenkatalysator.

15. Verfahren nach einem der Ansprüche 1 bis 12, **dadurch gekennzeichnet, daß** die Lösung, die im Einbringschritt verwendet wird, im wesentlichen aus den folgenden Komponenten, in vorgeschriebenen relativen Anteilen, besteht:
Tetraethylorthosilicat oder Tetramethylorthosilicat;
einem Alkohol;
entionisiertem Wasser;
kolloidalem Siliciumdioxid;
einem Dispersionsmittel; und
einem Säurekatalysator und/oder einem Basenkatalysator.

16. Verfahren nach einem der vorangehenden Ansprüche, **dadurch gekennzeichnet, daß** der poröse Körper der Form (11), die in den Schritten des Einbringens, Gelierenlassens, Trocknens und Entnehmens verwendet wird, eine im wesentlichen gleichförmige Dicke im Bereich von 3 bis 5 mm besitzt.

17. Verfahren nach einem der vorangehenden Ansprüche, **dadurch gekennzeichnet, daß**:
das Verfahren weiter einen Schritt des Altems des Gels (15) in der Form (11), vor dem Trocknungsschritt, umfaßt; und
der Alterungsschritt einen Schritt des Zugebens einer überdeckenden Flüssigkeit (17) zur Form einschließt, wobei die überdeckende Flüssigkeit (17) im wesentlichen dieselbe Zusammensetzung besitzt wie die Porenflüssigkeit und bis zu einer Höhe im Bereich von etwa 1 bis 20 mm zugegeben wird.

18. Verfahren nach einem der Ansprüche 1 bis 16, **dadurch gekennzeichnet, daß**:
das Verfahren weiter einen Schritt des Altems des Gels (15) in der Form, vor dem Trocknungsschritt, umfaßt; und
die Schritte des Gelierenlassens (15) der Lösung, Alterns des Gels (15) und Trocknens des Gels (15) alle eintreten, während die Lösung und das Gel (15) sich in der Form (11) befinden.

19. Verfahren nach Anspruch 18, **dadurch gekennzeichnet, daß** die Schritte des Gelierenlassens (15) der Lösung, Alterns des Gels (15) und Trocknens des Gels (15) alle eintreten, während die Form (11) sich in einem Autoklaven (13) befindet.

20. Verfahren zur Herstellung eines monolithischen Gegenstandes aus hochreinem Siliciumdioxid, welches die Schritte umfaßt:
Mischen einer Alkoxidlösung, die im wesentlichen aus den folgenden Komponenten, in vorgeschriebenen relativen Anteilen, besteht
Tetraethylorthosilicat oder Tetramethylorthosilicat;
einem Alkohol;
entionisiertem Wasser; und
einem Säurekatalysator und/oder einem Basenkatalysator;
Einbringen der Alkoxidlösung in eine Form (11), die aus einem porösen Graphitmaterial mit einer Porosität im Bereich von etwa 10 bis 15% und mit einer im wesentlichen gleichförmigen Dicke im Bereich von 3 bis 5 mm hergestellt ist;
Gelierenlassen (15) der Alkoxidlösung in der porösen Graphitform (11);
Altern des Gels (15) in der porösen Graphitform (11);
Trocknen des Gels (15) in der porösen Graphitform (11);
Entnehmen des getrockneten Gels (15) aus der porösen Graphitform (11); und
Sintern des getrockneten Gels (15), um einen monolithischen Gegenstand aus hochreinem Quarzglas herzustellen.

21. Verfahren nach Anspruch 20, **dadurch gekennzeichnet, daß** die Schritte des Gelierenlassens (15) der Alkoxidlösung, Alterns des Gels (15) und Trocknens des Gels (15) alle eintreten, während die Lösung und das Gel (15) sich in der porösen Graphitform (11) befinden.

22. Verfahren nach Anspruch 21, **dadurch gekennzeichnet, daß** die Schritte des Gelierenlassens (15) der Alkoxidlösung, Alterns des Gels (15) und Trocknens des Gels (15) alle eintreten, während die poröse Graphitform (15) sich in einem Autoklaven (13) befindet.

## Revendications

1. Procédé de production d'un monolithe de gel poreux sec comprenant les étapes de :
placement d'une solution comprenant un alcoxyde d'un élément choisi dans le groupe formé par le silicium, le titane, l'aluminium, le zirconium, le germanium, l'étain, le plomb et l'antimoine, dans un moule (11) présentant un corps formé principalement d'une matière poreuse choisie dans le groupe formé par le graphite, le carbure de silicium, le carbure de titane, le carbure de tungstène, et leurs mélanges, ladite matière étant inerte envers la solution ;
transformation de la solution en gel (15) dans le moule ;
séchage du gel (15) dans le moule (11) ; et
retrait du gel séché (15) du moule (11), afin de produire un monolithe de gel poreux sec.

2. Procédé selon la revendication 1, dans lequel le moule (11) employé dans les étapes de placement, gélification, séchage et retrait, est essentiellement homogène.

3. Procédé selon la revendication 1 ou 2, dans lequel le corps poreux du moule (11) utilisé dans les étapes de placement, gélification, séchage et retrait, présente une porosité suffisante pour permettre à un liquide présent dans les pores du gel (15) de s'échapper à travers ceux-ci.

4. Procédé selon l'une quelconque des revendications précédentes, dans lequel le corps poreux du moule (11) employé dans les étapes de placement, gélification, séchage et retrait, possède une masse volumique apparente d'environ 1,75 gm/cm³ et une porosité dans le domaine compris entre environ 10 et 15%.

5. Procédé selon la revendication 1, dans lequel le moule (11) possède un revêtement interne non poreux.

6. Procédé selon la revendication 5, dans lequel le revêtement interne non poreux est formé principalement d'une matière choisie dans le groupe formé par le graphite, le carbure de silicium, le carbure de titane, le carbure de tungstène, et leurs mélanges.

7. Procédé selon l'une quelconque des revendications 5 ou 6, dans lequel le revêtement interne non poreux du moule possède une épaisseur inférieure à environ 1 mm.

8. Procédé selon l'une quelconque des revendications précédentes, dans lequel le corps poreux du moule (11) employé dans les étapes de placement, gélification, séchage et retrait, est formé principalement de graphite.

9. Procédé selon l'une quelconque des revendications précédentes, dans lequel l'étape de séchage comprend une étape d'élévation suffisante de la température du gel (15) afin de sécher le gel (15) dans des conditions supercritiques.

10. Procédé selon l'une quelconque des revendications 1 à 8, dans lequel l'étape de séchage comprend une étape d'élévation suffisante de la température du gel (15) afin de sécher le gel (15) dans des conditions sous-critiques.

11. Procédé selon l'une quelconque des revendications précédentes, dans lequel l'étape de séchage comprend une étape d'élévation de la température du gel (15) à plus de 200°C.

12. Procédé selon l'une quelconque des revendications précédentes, dans lequel :
la solution employée dans l'étape de placement, se compose essentiellement des composants suivants dans des proportions relatives prescrites,
de l'orchosilicate de tétraéthyle ou l'orthosilicate de tétraméthyle,
un alcool,
de l'eau desionisée, et
un catalyseur acide et/ou un catalyseur basique ; et
le procédé comprend de plus une étape de frittage du monolithe de gel séché après l'étape de retrait, afin de produire un monolithe de silice.

13. Procédé selon la revendication 12, et comprenant de plus une étape de vieillissement du gel (15) dans le moule (11), avant l'étape de séchage.

14. Procédé selon l'une quelconque des revendications 1 à 12, dans lequel la solution employée dans l'étape de placement, comprend les composants suivants, dans des proportions prescrites :
de l'eau desionisée ;
de la silice colloïdale ;
un dispersant ; et
un catalyseur acide et/ou un catalyseur basique.

15. Procédé selon l'une quelconque des revendications 1 à 12, dans lequel la solution employée dans l'étape de placement se compose essentiellement des composants suivants, dans des proportions relatives prescrites :
de l'orchosilicate de técraéthyle ou l'orthosilicate de tétraméthyle ;
un alcool ;
de l'eau desionisée ;
de la silice colloïdale ;
un dispersant ; et
un catalyseur acide et/ou un catalyseur basique.

16. Procédé selon l'une quelconque des revendications précédentes, dans lequel le corps poreux du moule (11) employé dans les étapes de placement, de gélification, de séchage et de retrait, possède une épaisseur sensiblement uniforme dans le domaine compris entre 3 et 5 mm.

17. Procédé selon l'une quelconque des revendications précédentes, dans lequel :
le procédé comprend de plus une étape de vieillissemenc du gel (15) dans le moule (11) avant l'étape de séchage ; et
dans lequel l'étape de vieillissement comporte une étape d'addition d'un liquide d'apport (17) au moule, dans lequel le liquide d'apport (17) possède essentiellement la même composition que le liquide des pores et est ajouté jusqu'à une profondeur dans la plage d'environ 1 à 20 mm.

18. Procédé selon l'un quelconque des revendications 1 à 16, dans lequel :
le procédé comprend de plus une étape de vieillissement du gel (15) dans le moule, avant l'étape de séchage ; et
les étapes de transformation de la solution en gel (15), de vieillissement du gel (15) et de séchage du gel (15) ont toutes lieu pendant que la solution et le gel (15) restent situés dans le moule (11).

19. Procédé selon la revendication 18, dans lequel les étapes de transformation de la solution en gel (15), de vieillissement du gel (15) et de séchage du gel (15) ont toutes lieu pendant que le moule (11) est situé dans un autoclave (13).

20. Procédé de production d'un article monolithique de silice de haute pureté, comprenant les étapes de :
mélange d'une solution d'alcoxyde qui se compose essentiellement des composants suivants, dans des proportions relatives prescrites
de l'orthosilicate de tétraéthyle ou l'orthosilicate de tétraméthyle ;
un alcool ;
de l'eau desionisée ; et
un catalyseur acide et/où un catalyseur basique ;
placement de la solution d'alcoxyde dans un moule (11) formé par une matière de graphite poreuse possédant une porosité dans le domaine compris entre environ 10 et 15% et possédant une épaisseur essentiellement uniforme dans le domaine compris entre 3 et 5 mm ;
transformation de la solution d'alcoxyde en gel (15) dans le moule de graphite poreux (11) ;
vieillissement du gel (15) dans le moule de graphite poreux (11) ;
séchage du gel (15) dans le moule de graphite poreux (11) ;
retrait du gel séché (15) du moule de graphite poreux (11) ;
et
frittage du gel séché (15) pour produire un article monolithique de verre de silice de haute pureté.

21. Procédé selon la revendication 20, dans lequel les étapes de transformation de la solution d'alcoxyde en gel (15), de vieillissement du gel (15) et de séchage du gel (15) ont toutes lieu pendant que la solution et le gel (15) restent situés dans le moule de graphite poreux (11).

22. Procédé selon la revendication 21, dans lequel les écapes de transformation de la solution d'alcoxyde en gel (15), de vieillissement du gel (15) et de séchage du gel (15) ont toutes lieu pendant que le moule de graphite poreux (15) est situé dans un autoclave (13).
